# NEUE EUROPÄISCHE PATENTSCHRIFT

(11) **EP 2 841 766 B2**
(45) Veröffentlichungstag und Bekanntmachung des Hinweises auf die Entscheidung über den Einspruch: **31.12.2025**
(45) Hinweis auf die Patenterteilung: 02.06.2021
(21) Anmeldenummer: 13718857.9
(22) Anmeldetag: 29.04.2013
(51) Int. Cl.: F03D 7/04, H02J 3/18, H02J 3/38

(54) **WINDPARK MIT SCHNELLER LOKALER BLINDLEISTUNGSREGELUNG**
WIND FARM WITH FAST LOCAL REACTIVE POWER CONTROL
PARC ÉOLIEN PERMETTANT UNE RÉGULATION LOCALE RAPIDE DE LA PUISSANCE RÉACTIVE

(30) Priorität: 27.04.2012 US 201261639379 P
(43) Veröffentlichungstag der Anmeldung: 04.03.2015
(73) Patentinhaber: Siemens Gamesa Renewable Energy Service GmbH, 20097 Hamburg (DE)
(72) Erfinder: FORTMANN, Jens, 13156 Berlin (DE)
(74) Vertreter: Glawe, Delfs, Moll
(86) Internationale Anmeldenummer: PCT/EP2013/058920
(87) Internationale Veröffentlichungsnummer: WO 2013/160486

(56) Entgegenhaltungen:
- EP-A2- 2 244 348
- WO-A1-2006/066797
- WO-A2-2009/036895
- WO-A2-2012/028150
- DE-A1- 102004 048 341
- JENS FORTMANN, WILCH MICHAEL, KOCH FRIEDRICH, ERLICH ISTVAN: "A NOVEL CENTRALISED WIND FARM CONTROLLER UTILISING VOLTAGE CONTROL CAPABILITY OF WIND TURBINES", 16TH PSCC, 14 July 2008 (2008-07-14), pages 1 - 7, XP055139449, Retrieved from the Internet <URL:http://www.pscc-central.org/uploads/tx_ethpublications/pscc2008_159.pdf> [retrieved on 20140910]
- JORGE GARCIA MARTINEZ: "Voltage Control in Wind Power Plants with Doubly Fed Generators", AALBORG EAST, DENMARK, AALBORG UNIVERSITY, AALBORG, DENMARK, 1 September 2010 (2010-09-01), Aalborg, Denmark , pages 1 - 232, XP055018493, ISBN: 9788789179926, Retrieved from the Internet <URL:http://vbn.aau.dk/files/44428198/jorge_martinez_garcia.pdf> [retrieved on 20120206]
- Erlich, Istvan et al., "Modeling of Wind Turbines Based on Doubly-FedInduction Generators for Power System Stability Studies", IEEETransactions on Power Systems, Ausgabe 22, Nr 3, 2007
- Hau, Erich. "Windkraftanlagen", 2 Auflage, Springer-Verlag, 1996ISBN: 3-540-57430-1
- Print-out of publication site of the University of Applied Sciences Berlin,downloaded from https://www htw-berlin.de/forschung/online-forschungskatalog/publikationen/ publikation/?eid=9626 on 02.03.2022
- Print-out of publication download site of Aalborg University regarding PHDthesisD2/Garcia, downloaded fromhttps j'/vbn.aau.dk/en/publications/voltage -control-in-wind-power-plants-with-doublv-fed-aenerators on 02.03.2022

## Beschreibung

Die Erfindung betrifft einen Windpark mit einem Parkmaster und mehreren Windenergieanlagen. Bei den Windenergieanlagen ist jeweils eine lokale Regelung vorgesehen, um vom Parkmaster vorgegebene Sollwerte in Bezug auf Blindleistung umzusetzen.

Durch umfangreichen Zubau von Windenergieanlagen wird ihr Einfluss auf das Verhalten von Übertragungsnetzen immer größer. Es wird daher von Windparks zunehmend erwartet, dass sie auch zur Gewährleistung der Sicherheit und Stabilität des Übertragungsnetzes beitragen. Dies bedeutet, dass die Windparks nicht nur Wirkleistung einspeisen müssen, sondern sofern benötigt auch Blindleistung. Kritisch hierbei ist, dass anders als konventionelle Kraftwerke mit ihren typischerweise verwendeten Synchrongeneratoren Windenergieanlagen eine andere Generatortechnologie benutzen, nämlich in der Regel eine Kombination aus Asynchrongenerator mit Teil- oder Vollumrichter oder Synchrongenerator mit Vollumrichter. Die Bauweise mit dem Umrichter bietet den Vorteil, dass der Blindleistungsanteil in gewissen Grenzen frei gewählt werden kann. Dem steht als Nachteil gegenüber, dass die intrinsische Spannungsstabilisierung, wie sie von klassischen Synchrongeneratoren aufgrund ihrer elektrischen Charakteristika ausgeht, von den mit Umrichtern versehenen Windenergieanlagen und den damit bestückten Windparks nicht geleistet werden kann.

Aus der WO 2009/036896 A2 ist ein Windpark mit mehreren Windenergieanlagen und einem Parkmaster bekannt, wobei der Parkmaster Sollwertvorgaben an Lokalregler der Windenergieanlagen ausgibt. Weiter sind die Lokalregler jeweils mit einem Zusatzregler versehen, die ebenfalls auf einen vorgegebenen Sollwert regeln. Bei Ausfall der Sollwert-Vorgabe vom Parkmaster können lokal Ersatzwerte als Sollwerte verwendet werden. Aus einem Fachartikel (J. Fortmann et al.: "A Novel Centralized Wind Farm Controller Utilizing Voltage Control Capability of Wind Turbines", 16th PSCC, Glasgow, Scotland, 2008) ist es bekannt, den Lokalregler mit einer Doppelstruktur zu versehen, die einen Sollwertkanal, an den Sollwerte vom Parkmaster angelegt sind, und einen Responsivkanal aufweist. Weiter ist ein Lokalregler mit einem Sollwertkanal sowie einem zweiten Kanal bekannt aus einer Dissertation (Jorge Martinez Garcia, " Voltage Control in Wind Power Plants with Doubly Fed Generators", Aalborg University, Dänemark, 2010.)

Der Erfindung liegt die Aufgabe zu Grunde, Windparks bzw. deren Windenergieanlagen so zu verbessern, dass sie ein besseres Verhalten in Bezug auf die Blindleistungseinspeisung insbesondere im Fall von Netzstörungen aufweisen und den bisher vorhandenen Widerspruch zwischen Stabilität im stationären Betrieb und schneller Reaktion verringern.

Die erfindungsgemäße Lösung liegt in einem Windpark bzw. einer Windenergieanlage mit den Merkmalen der unabhängigen Ansprüche. Vorteilhafte Weiterbildungen sind Gegenstand der abhängigen Ansprüche.

Bei einem Windpark umfassend einen Parkmaster, ein Parknetz und mehrere darüber verbundene Windenergieanlagen zur Einspeisung von Leistung in ein Netz gemäß einem Leitparameter, wobei der Parkmaster einen Regler aufweist mit einem Eingang für den Leitparameter und einem Eingang für Ist-Werte der eingespeisten Leistung und einem Ausgang, welcher Sollwertvorgaben an die Windenergieanlagen ausgibt, wobei die Windenergieanlagen einen von einem Windrotor angetriebenen Generator mit Umrichter zur Erzeugung elektrischer Leistung und Abgabe an das Parknetz und einen Lokalregler für die von dem Parkmaster angelegte Sollwertvorgabe aufweist, der auf den Umrichter wirkt, wobei der Lokalregler eine Doppelstruktur aufweist mit einem Sollwertkanal, an dem die Sollwertvorgabe vom Parkmaster angelegt ist und der ausgebildet ist zur Ausgabe eines stationären Blindleistungswerts, einem Responsivkanal, der einen autarken Regler umfasst, an dem keine Sollwertvorgabe vom Parkmaster angelegt ist und an den eine Istspannung der jeweiligen Windenergieanlage über einen Washout-Filter angelegt ist, und ferner ein Aggregator vorgesehen ist, welcher den Sollwertkanal und den Responsivkanal zusammenfasst, ist erfindungsgemäß vorgesehen, dass der Responsivkanal ein Überlastmodul aufweist, das erhöhte Grenzwerte für eine Ausgangsgröße des autarken Reglers zumindest für eine beschränkte Zeit vorsieht.

Nachfolgend seien einige verwendete Begriffe erläutert.

Unter einem Leitparameter wird ein die Blindleistungsabgabe des Windparks bestimmender Parameter verstanden. Hierbei kann es sich insbesondere um die Vorgabe einer abzugebenden Blindleistung Q bzw. eines abzugebenden Blindstroms i_{Q} handeln, oder um die Vorgabe eines Phasenwinkels φ bzw. des entsprechenden Leistungsfaktors cos φ. Es kann sich aber auch um eine Spannungsvorgabe handeln, welche dann entsprechend in eine Blindleistungsvorgabe umgerechnet wird, bspw. über eine an sich bekannte Spannungsstatik.

Unter einem Washout-Filter wird ein Filter verstanden, welches stationäre Signalanteile blockt und transiente Signalanteile durchlässt.

Die Erfindung beruht auf dem Gedanken, dass im regulären Betrieb mit stabilem Netz der Parkmaster mit seinem Regler die dominierende Kontrolle über die Windenergieanlagen und deren Blindleistungsabgabe ausübt. Da im stabilen Betrieb Änderungen nur langsam vor sich gehen, genügt dementsprechend ein langsamer Regler im Parkmaster; eine solche langsame Regelung ist sogar von Vorteil, da sie aufgrund ihrer immanenten Trägheit der Gefahr von Regelschwingungen in Interaktion mit den lokalen Reglern der Windenergieanlagen entgegenwirkt. Weiter vermeidet ein langsamer Regler unnötige Reglerbetätigungen. Ein erheblicher praktischer Vorteil hierbei ist ferner, dass die Kommunikation in den häufig weitläufigen Windparks damit nicht zeitkritisch ist. Bei den somit vom Parkmaster zu den Windenergieanlagen übertragenen Sollwerten handelt es sich sozusagen um die für den eingeschwungenen Zustand ("steady state"). Auf diesen regelt die Windenergieanlage mit ihrem Lokalregler in an sich bekannter Weise.

Die Besonderheit der Erfindung liegt darin, dass sie für den Lokalregler zusätzlich einen Regler mit einem Washout-Filter vorsieht im sogenannten Responsivkanal, wobei dieser Regler autark ist, d. h. an ihm ist der Sollwert von dem Parkmaster nicht angelegt. Der Responsivkanal kann damit unbeeinflusst von dem Parkmaster allein auf lokale Änderungen reagieren. Erfindungsgemäß tut er dies bei transienten Änderungen. Typische Werte liegen im Subsekundenbereich, wobei praktisch ausgeführte Regelungen vorzugsweise Konstanten von höchstens 100 ms aufweisen. Dank dieses Responsivkanals braucht die Windenergieanlage bei Störungen nicht auf neue, angepasste Sollwerte vom Parkmaster zu warten, sondern kann vollkommen autark auf die Störung reagieren. Bei schnell auftretenden, transienten Störungen, insbesondere bei Spannungsspitzen, übt der Responsivkanal so die dominierende Kontrolle auf die Windenergieanlage aus. Damit kann die Windenergieanlage selbst viel schneller die an ihr anliegende Spannung kontrollieren und damit stabilisieren. Unerwünschten Abweichungen, insbesondere durch Spannungstransienten, kann damit nicht nur schnell begegnet werden, sondern auch lokal genau an den Stellen, an denen sie auftreten. Der Responsivkanal weist erfindungsgemäß ein Überlastmodul auf. Es ist dazu ausgebildet, erhöhte Grenzwerte für eine Ausgangsgröße des autarken Reglers zumindest für eine beschränkte Zeit zuzulassen, so dass im Responsivkanal stärker auf Störungen reagiert werden kann.

Der Kern der Erfindung liegt in einer Dominanzverschiebung, nämlich von dem Sollwertkanal im stationären und quasistationären Betrieb zu dem Responsivkanal im dynamischen, gestörten Betrieb. Die Erfindung löst damit den scheinbaren Widerspruch, einerseits durch eine eher träge Regelung Stabilität auf Parkebene zu gewährleisten, und andererseits schnell und wirksam auf Störungen reagieren zu können, auf frappierend einfache und sehr wirksame Weise. Hierbei kann es durchaus zur Überschreitung der für den Dauerbetrieb vorgesehenen Nennleistung kommen; entsprechendes gilt für die Strombelastung. Zusammenfassend lässt sich also feststellen, dass mit der Erfindung zur Erreichung einer stationären Genauigkeit der Regler im Parkmaster dominiert, während zur Bekämpfung von Störungen die nur auf Transienten ansprechende und autarke Regelung an der Windenergieanlage dominiert. Dank dieses Konzepts der Autarkie kann die Windenergieanlage eigenständig reagieren. Diese Kombination von lokaler und schneller Regelung ermöglicht es auch, lokale Kurzzeitreserven zu mobilisieren, um somit schnell und hart auf Störungen reagieren zu können. Eine solche lokale Kurzzeitreserve liegt bspw. in der Nutzung der typischerweise für kurze Zeiträume gegebenen Überlastfestigkeit des Umrichters, die es erlaubt, für einen kurzen Zeitraum von typischerweise einigen hundert Millisekunden einen höheren Strom als den Nennstrom zu übertragen, und damit mehr Blindleistung abgeben zu können. Mit einer zentralen Regelung am Parkmaster, und sei sie noch so schnell und ausgefeilt, wäre dies unter Berücksichtigung der Verzögerungszeiten durch die parkinterne Kommunikation praktisch unmöglich.

Vorzugsweise ist der autarke Regler der Windenergieanlage so auf den Regler am Parkmaster abgestimmt, dass der autarke Regler der schnelle und der Regler am Parkmaster der langsame ist.

Die wesentlichen Eigenschaften des Reglers am Parkmaster und der autarken Regelung an der Windenergieanlage lassen sich wie folgt zusammenfassen: Die Regelung am Parkmaster trägt zur Kontrolle der Spannung am Netz und des Leistungsflusses bei. Sie kümmert sich darum, dass langfristig die gewünschte Blindleistung bereitgestellt wird. Die Zeitkonstante ist vorzugsweise eher lang im Bereich von typischerweise 10 bis 60 s. Der Parkmaster soll mit seiner Regelung typischerweise nicht reagieren auf schnelle Spannungsänderungen, insbesondere auch um Wechselwirkungen mit Reglern der Windenergieanlagen und damit Oszillationen zu vermeiden. Reagieren soll der Parkmaster hingegen auf Änderungen eines Leitparameters von außen. Damit wird am Parkmaster die Langzeitblindleistungsreferenz eingestellt. Dies geschieht im Rahmen der Langzeitfähigkeiten der einzelnen Windenergieanlagen. Wird als Leitparameter die Spannung verwendet, so dass der Windpark als Ganzes in einem Spannungssteuerungsmodus arbeitet, soll er auf langsame Änderungen der Spannungen reagieren.

Im Gegenzug dazu ist die autarke Regelung einer Windenergieanlage primär zur Regelung der Spannung ausgebildet. Sie kann insbesondere bei Kurzschlüssen schnell mit der Einspeisung hoher Ströme reagieren. Bevorzugte Zeitkonstanten hierfür betragen für die lokale Regelung 20 bis 30 ms. Die lokale, autarke Regelung reagiert dominierend auf Änderungen der lokalen Spannung einer Windenergieanlage. Sie reagiert schnell, um den Spannungsbereich zu stabilisieren. Die Windenergieanlage bzw. der Windpark als Ganzes verhält sich gegenüber dem Netz bei Spannungsstörungen in ähnlich vorteilhafter Weise wie Kraftwerke mit herkömmlichen Synchrongeneratoren.

Um sicherzustellen, dass der Responsivkanal nur auf schnelle Spannungsänderungen anspricht, wie sie insbesondere für Spannungstransienten durch Störungen wie Kurzschlüsse etc. typisch sind, ist das Washout-Filter vorgesehen. Damit werden langsame Zustandsänderungen an der Spannung, die in den Regelbereich des Parkmasters fallen sollen, von der lokalen Regelung ferngehalten. Das Washout-Filter kann in der Bauart eines Hochpassfilters ausgeführt sein. Besonders bevorzugt ist es, wenn das Washout-Filter ein Untermodul zur Bestimmung eines geglätteten Spannungsverlaufs aufweist. Damit kann zum einen durch Bildung einer Differenz zwischen dem geglätteten Spannungsverlauf und dem tatsächlichen Spannungsverlauf ein zuverlässiges Maß für schnelle Spannungsänderungen, wie sie bekanntlich für Störungen typisch sind, gewonnen werden. Zum anderen kann damit auf elegante Weise mit dem geglätteten Spannungsverlauf ein Maß bereitgestellt werden, welches für den vom Parkmaster angesteuerten (langsamen) Sollwertkanal vorteilhaft in die Berechnung der längerfristig einzustellenden Werte (eingeschwungener Zustand) einbezogen werden kann.

Die Trennung von Regelung für den eingeschwungenen Zustand in den Sollwertkanal und einer schnellen Reaktion auf Störungen in dem Responsivkanal bringt weiter den Vorteil mit sich, dass der autarke Regler für den Responsivkanal weitgehend frei ausgelegt werden kann. Typischerweise verlangen die Netzanschlusskriterien nämlich nur ein Proportionalverhalten bezogen auf den eingeschwungenen Zustand ("steady state"). Damit können für den autarken Regler im Responsivkanal vielfältige Arten von Regelungen benutzt werden, ohne dabei auf einen Proportionalregler festgelegt zu sein. Zweckmäßigerweise ist im Responsivkanal ein Limiter vorgesehen, welcher die Ausgangsgröße des autarken Reglers beschränkt. Dies hat den Vorteil, dass zum einen auch große Verstärkungsfaktoren für den autarken Regler verwendet werden können, ohne dass es bei schlagartigen großen Abweichungen zu einer übermäßigen Reaktion des Reglers kommt. Der Limiter vereint damit eine schnelle Reaktion mit einer Sicherung der Stabilität durch Verhinderung übergroßer Stellsignale am Ausgang des autarken Reglers.

Zweckmäßigerweise ist das Untermodul zur Bestimmung des geglätteten Spannungsverlaufs als ein Speicher ausgebildet, welcher einen Steady-State-Wert für die Spannung der Windenergieanlage als geglätteten Spannungswert ausgibt. Ein solcher Speicher für den Spannungswert gemäß dem eingeschwungenen Zustand kann dieser gespeicherte Wert mit Vorteil für den Sollwertkanal verwendet werden, bspw. zur Umrechnung von Blindleistungssollwerten vom Parkmaster in an der jeweiligen Windenergieanlage einzustellende Ströme. Vorzugsweise ist das Washout-Filter gebildet aus dem Untermodul zur Bestimmung eines geglätteten Spannungsverlaufs und einem Differenzglied, an dessen einem Eingang der Ausgang des Untermoduls und an dessen anderem Eingang ein Ist-Wert für die jeweilige Spannung angeschlossen ist. Damit kann auf einerseits einfache aber auch zweckmäßige Weise sowohl ein Maß für die hochfrequenten Störungen, wie insbesondere Spannungsspitzen, gewonnen werden zur Verwendung im Responsivkanal, aber auch ein Maß für den Grundwert im eingeschwungenen Zustand gewonnen werden zur Verwendung auch an anderer Stelle, bspw. im Sollwertkanal.

Vorzugsweise weist der Sollwertkanal einen eigenen Regler auf, der zweckmäßigerweise entsprechend dem autarken Regler parametrisiert ist. Überraschenderweise hat sich gezeigt, dass dank der unterschiedlichen erfindungsgemäßen Konfiguration des Sollwertkanals einerseits und des Responsivkanals andererseits mit ihren verschiedenen Eingangsgrößen gleichartige Regler mit ähnlichen, wenn nicht sogar identischen Parametern verwendet werden können. Dennoch wird durch die erfindungsgemäße Doppelstruktur erreicht, dass auf lokale Störungen in Folge von Spannungsspitzen bedeutend schneller reagiert werden kann als auf Sollwertänderungen vom Parkmaster. In Anbetracht der grundverschiedenen Aufgaben der beiden Kanäle ist dies überraschend. Daraus resultiert ein erheblicher praktischer Mehrwert, da es so zweckmäßigerweise ermöglicht ist, den Regler im Sollwertkanal mit dem autarken Regler zu kombinieren und zu einem zusammenzufassen. Dies ergibt zum einen eine erhebliche Vereinfachung der Reglerstruktur, und zum anderen wären weniger Parameter einzustellen. Es ist der Verdienst der Erfindung erkannt zu haben, dass trotz oder auch gerade wegen der erfindungsgemäßen Doppelstruktur mit der autarken Regelung im Responsivkanal identisch parametrisierte Regler für den Sollwert- und Responsivkanal verwendet werden können, die sich sogar kombinieren lassen.

Vorzugsweise ist das Überlastglied dazu ausgebildet, vorzugsweise mittels eines Zeitglieds für kurze Zeiträume erhöhte Leistungsgrenzen zuzulassen. Hierbei kann die dann eingestellte Spitzenleistung beträchtlich höher sein aber eben nur über eine recht kurze Zeitdauer, und damit eine insbesondere thermische Überlastung der Bauelemente, vor allem des Umrichters, verhindern. Entsprechend gilt, es wird kurzfristig ein erhöhter Spitzenstrom, der größer ist als der Nennstrom, zugelassen.

Bei einer zweckmäßigen Ausführungsform ist der Regler des Parkmasters mit einer Spannungsstatik ausgeführt. Eine Spannungsstatik definiert den Blindleistungsbedarf als eine Funktion einer vorbestimmten Spannungsabweichung um die Nennspannung, wobei bei Erreichen eines unteren bzw. oberen Grenzspannungswerts jeweils die maximale kapazitive bzw. induktive Blindleistung eingespeist wird. Zweckmäßigerweise ist eine solche Spannungsstatik dem eigentlichen Regler im Parkmaster vorgeschaltet. Bei einer solchen Implementation wird erreicht, dass mittels der Spannungsstatik die Spannung am Verknüpfungspunkt des Windparks mit dem Übertragungsnetz, dem sogenannten Point-of-Common-Coupling (PCC), nur überwacht und mit einem Sollwert verglichen zu werden braucht, um daraus mit Hilfe der besagten Spannungsstatik einen Sollwert für die vom Parkmaster einzustellende Blindleistung zu generieren. Je nach Diskrepanz der tatsächlich eingespeisten Blindleistung gibt der Parkmaster dann entsprechende Sollwertvorgaben an die einzelnen Windenergieanlagen aus, wobei die Sollwertvorgaben bspw. Blindleistungsänderungen, Phasenwinkeländerungen oder Spannungsänderungen in Gestalt von Vorgaben an die einzelnen Windenergieanlagen sein können. Es ist aber nicht so, dass zwingend die Spannung am Verknüpfungspunkt (PCC) als Eingangsgröße für den Parkmaster zu verwenden ist. Genauso gut kann vorgesehen sein, dass stattdessen die an diesem Verknüpfungspunkt eingespeiste Blindleistung oder der dort herrschende Phasenwinkel zu berücksichtigen ist. Welcher Parameter hierfür verwendet wird, also als Leitparameter im Sinne dieser Erfindung dient, ist letztlich Sache des Netzbetreibers und er legt dies typischerweise in seinen Netzanschlussrichtlinien (Grid Code) fest. Eine bevorzugte Ausführungsform für den Regler im Parkmaster ist ein PI-Regler. Dieser hat den Vorzug, dass er stationäre Genauigkeit mit einem eher langsamen Regelverhalten vereinen kann, und damit sowohl für stationäre Genauigkeit wie auch für Stabilität sorgen kann. Die von dem Regler im Parkmaster berechneten Ausgangssignale sind zweckmäßigerweise individuell auf die einzelnen Windenergieanlagen des Parks aufgeteilt.

Die lokale Regelung in der Windenergieanlage kann je nach der von dem Parkmaster ausgegebenen Art der Sollwertvorgabe als Blindleistungsregelung, als Phasenwinkelregelung oder auch als Spannungsregelung ausgeführt sein. Wesentlich ist, dass die lokale Regelung einen autarken Responsivkanal aufweist. Nur dann kann die von der Erfindung erwünschte schnelle Reaktion auf Spannungsstörungen erfolgen. Damit wird den Windenergieanlagen und dem Windpark als Ganzes ein synchrongeneratorgleiches Verhalten bei Netzspannungsstörungen verliehen.

Die Erfindung erstreckt sich ferner auf ein Verfahren zum Betreiben eines Windparks mit Windenergieanlagen gemäß dem vorstehend beschriebenen.

Die Erfindung wird nachfolgend unter Bezugnahme auf die beigefügte Zeichnung näher erläutert, in der vorteilhafte Ausführungsbeispiele dargestellt sind. Es zeigen:
- Fig. 1:: eine schematische Ansicht eines Windparks gemäß einem Ausführungsbeispiel der Erfindung;
- Fig. 2 a, b:: verschiedene alternative Darstellungen eines Blockdiagramms für einen Parkregler;
- Fig. 3 a, b:: zwei Ausführungsbeispiele für lokale Regler an Windenergieanlagen für den Windpark gemäß dem Ausführungsbeispiel;
- Fig. 4 a-c:: verschiedene Ausführungen für den lokalen Regler der Windenergieanlage;
- Fig. 5 a, b:: eine kombinierte Blockdarstellung des Parkreglers und des lokalen Reglers der Windenergieanlage gemäß einem bevorzugten Ausführungsbeispiel und einer alternativen Ausführungsform der Erfindung;
- Fig. 6:: Diagramme zum Verhalten des Windparks bei einem Netzfehler; und
- Fig. 7:: Diagramme, welche Spannung und Blindleistung gegenüberstellen.

Ein Windpark gemäß einem Ausführungsbeispiel der Erfindung umfasst einen Parkmaster 1 sowie mehrere Windenergieanlagen 4, die über ein Kommunikationsnetz 2 verbunden sind, und wobei ferner ein parkinternes Netz 3 vorgesehen ist, welches die von den Windenergieanlagen 4 erzeugte elektrische Leistung zusammenfasst und über einen Verknüpfungspunkt 9 an ein angeschlossenes Energieübertragungsnetz 99 abgibt. Die Windenergieanlagen umfassen jeweils einen Windrotor 40, der über eine Rotorwelle 41 mit einem Generator 42 verbunden ist und diesen antreibt. Der Generator 42 ist in dem dargestellten Ausführungsbeispiel als ein doppelt gespeister Asynchrongenerator ausgeführt mit einem Stator und einem Rotor. An den Stator ist über eine Anschlussleitung 43 direkt ein Anlagentransformator 44 angeschlossen, über den die Windenergieanlage 4 die von ihr erzeugte elektrische Leistung an das Parknetz 3 abgibt. An den Rotor des Generators 42 ist ein Ende eines Umrichters 45 angeschlossen, dessen anderes Ende mit der Verbindungsleitung 43 verbunden ist. Durch den Umrichter 45 wird die im Rotor entstehende elektrische Energie geführt. Ferner ist an dem Umrichter 45 eine lokale Regelung 5 der Windenergieanlage 4 angeschlossen.

Die lokale Regelung 5 der Windenergieanlage 4 ist über das Kommunikationsnetz 2 mit dem Parkmaster 1 verbunden und erhält von diesem Sollwerte. Ferner sind an die lokale Regelung 5 Messsensoren 50 für elektrische Parameter an der Windenergieanlage 4 angeschlossen, bspw. in dem dargestellten Ausführungsbeispiel ein Spannungssensor. Der lokale Regler 5 ist dazu ausgebildet, die Windenergieanlage 4 in ihrem Betrieb zu steuern. Dazu erhält er Sollwerte von dem Parkmaster 1 über das Kommunikationsnetz 2. Ferner überwacht er gewisse elektrische Parameter, vorliegend die Spannung, mittels eigener Sensorik in Form des Spannungssensors 50.

Der Parkmaster 1 ist dazu ausgebildet, die Windenergieanlagen 4 des Windparks zentral zu steuern. Er gibt über das Kommunikationsnetz 2 an die Windenergieanlagen 4 jeweils individuell Vorgaben zu deren Betriebsverhalten aus. Der Parkmaster 1 wiederum erhält Vorgaben vom Betreiber des Netzes 99. Alternativ oder zusätzlich weist der Parkmaster 1 Spannungs- und Stromsensoren 10, 11 am Verknüpfungspunkt 9 mit dem Netz auf, so dass er sowohl die Netzspannung und gewünschtenfalls auch die abgegebene Wirk-bzw. Blindleistung überwachen kann.

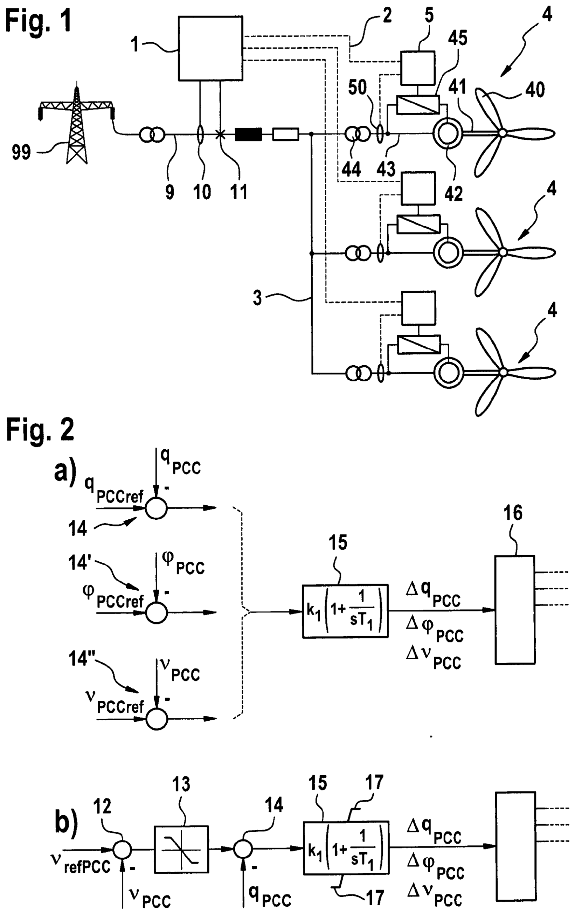

Der Aufbau des Parkmasters 5 ist in den Figuren 2 als Blockdiagramm dargestellt. Der Parkmaster 1 weist eine Eingangsstufe 14 auf, in welcher ein von dem Betreiber des Übertragungsnetzes 99 vorgegebener Referenzwert angelegt und mit einem entsprechenden, von den Sensoren 10, 11 ermittelten Ist-Wert verglichen wird. Hierbei kann als Referenz die abgegebene Blindleistung q an der Eingangsstufe 14, für den Phasenwinkel φ an der Eingangsstufe 14' oder für die abgegebene Spannung v an der Eingangsstufe 14" vorgesehen sein. Die Eingangsstufe bildet aus dem Referenzwert und aus dem Ist-Wert eine Differenz und legt diese an einen Eingang eines Reglerkerns 15 ab, der in dem dargestellten Ausführungsbeispiel als ein Proprotional-Integral-Regler (PI-Regler) ausgeführt ist. Welche der Eingangsgrößen Blindleistung q, Phasenwinkel φ oder Spannung am Verknüpfungspunkt v verwendet wird, hängt von den Vorgaben des Betreibers des Übertragungsnetzes 99 ab. Mittels des Reglerkerns 15 werden entsprechende Ausgangssignale in Bezug auf die einzustellende Korrektur der Blindleistung Δq_{PCC}, Δφ_{PPC} bzw. Δv_{PPC} erzeugt und über ein Verteilungsmodul 16 an das parkinterne Kommunikationsnetz 2 und darüber an die einzelnen Windenergieanlagen 4 ausgegeben. Eine solche Grundstruktur des Parkreglers ist in Fig. 2 a dargestellt.

Es kann ferner eine Sonderform vorgesehen sein für den Parkregler, wie sie in Fig. 2 b dargestellt ist. Hierbei ist dem eigentlichen Reglerkern 15 mit seiner Eingangsstufe 14 ein Vorfilter vorgeschaltet, welches aus einer Spannungsstatik 13 sowie einem Differenzglied 12 zur Bestimmung einer Fehlerspannung am Verknüpfungspunkt 9 besteht. An das Differenzglied 12 ist die tatsächlich vorhandene, gemessene Spannung v_{PPC} am Verknüpfungspunkt 9 angelegt und wird verglichen mit einem voreingestellten Referenzwert für die Spannung v_{refPCC}. Die sich hieraus ergebende Differenz, mithin also ein Spannungsfehler am Verknüpfungspunkt 9, wird als Eingangssignal an die Spannungsstatik 13 angelegt. In der Spannungsstatik 13 ist eine Kennlinie implementiert, welche in Abhängigkeit von der Spannungsabweichung jeweils eine Blindleistungsvorgabe ausgibt. Dies geschieht bei dem dargestellten Ausführungsbeispiel in der Weise, dass bei einer Spannungsabweichung von Null keine Blindleistung vorgeschrieben werden soll, mithin also der Ausgangswert Null ist. Hingegen soll bei einer Spannungsabweichung nach unten, also bei Unterspannung, vielmehr immer mehr Blindleistung abgegeben werden, bis schließlich bei einem Grenzwert vₘᵢₙ die höchstmögliche Blindleistungsabgabe qₘₐₓ erreicht ist. Umgekehrt soll bei einer Spannungsabweichung zum Positiven, also bei Überspannung, negative Blindleistung abgegeben werden, wobei die größtmögliche negative Blindleistung qₘᵢₙ bei Erreichen einer maximalen Spannung vₘₐₓ erreicht und beibehalten werden soll. Die entsprechenden Vorgabewerte für die Blindleistung, welche nach der Spannungsstatik 13 zwischen qₘᵢₙ und qₘₐₓ liegen, bilden den Referenzwert für die Eingangsstufe 14. Dort erfolgt der Vergleich mit der tatsächlich abgegebenen Blindleistung q_{PPC} am Verknüpfungspunkt 9, wie vorstehend bereits im Zusammenhang mit Fig. 2 a beschrieben.

Der Regler 15 des Parkmasters 1 ist dazu ausgebildet, auf Änderungen der Belastungssituation im Übertragungsnetz 99 und, insbesondere bei Verwendung der Spannungsstatik 13, auf Spannungsänderungen zu reagieren. Er tut dies in der Weise, dass er die Sollwerte für von dem Windpark abzugebende Blindleistung verändert. Der Regler 15 ist so parametriert, dass seine Zeitkonstante im Bereich von etwa 10 bis 60 s liegt. Damit ist der Parkmaster 1 befähigt, auf entsprechende externe Vorgaben in Bezug auf Blindleistung bzw. Spannung zu reagieren und an seinem Ausgang über das Kommunikationsnetz 2 Langzeitblindleistungsreferenzwerte an die einzelnen Windenergieanlagen auszugeben. Der Regler 15 weist vorzugsweise eine Begrenzung 17 auf. Damit wird sichergestellt, dass die Dauerbelastbarkeit der Windenergieanlagen 4 nicht durch überhöhte Blindleistungsvorgaben überschritten wird. Durch die lange Zeitkonstante des Reglerkerns 15 ist sichergestellt, dass auf sich durch Laständerungen ergebende langsame Spannungsänderungen entsprechend reagiert werden kann. Dementsprechend gibt der Parkmaster 1 berichtigte Werte für die Betriebspunkteinstellung an die Windenergieanlagen 4 aus. Es ist anzumerken, dass wegen begrenzter Übertragungsgeschwindigkeit über das Kommunikationsnetz 2 dies nur mit einer gewissen Zeitverzögerung erfolgen kann. Da der Regler 15 im Parkmaster 1 ohnehin aber mit einer großen Zeitkonstante im Bereich von 10 bis 60 s betrieben wird, wirkt sich die Begrenzung der Übertragungsgeschwindigkeit über das Kommunikationsnetz 2 nicht nachteilig aus.

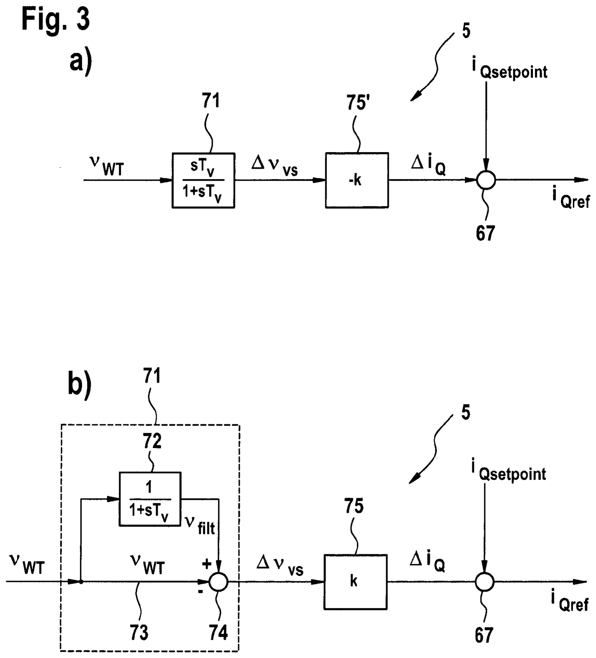

Eine Rumpfstruktur für den lokalen Regler 5 der Windenergieanlage 4 ist in Fig. 3 a dargestellt. Der Regler 5 gibt an seinem Ausgang ein Signal für einen Blindstrom i_{Qref} aus, der von dem Umrichter 45 einzustellen ist. Dieser einzustellende Blindstrom ist gebildet aus der Summe einer stationären Komponente und einer dynamischen Komponente. Die stationäre Komponente i_{Qsetpoint} steht hierbei für den Sollwert, wie er vom Parkmaster 1 vorgegeben ist. Die dynamische Komponente ist gebildet von einem Differenzstrom Δi_{Q}, welcher abhängig ist von Spannungsänderungen an der Windenergieanlage 4. Durch die Verwendung eines sogenannten Washout-Filters 71 kann sichergestellt werden, dass von den durch den Spannungssensor 50 gemessenen Werte für die Spannung an der Windenergieanlage v_{WT} nur Spannungsänderungen Δv_{VS} weitergeleitet werden, und keine stationären Zustandsänderungen der Spannung an der Windenergieanlage übertragen werden. Angelegt wird diese Spannungsabweichung an ein Proportionalsteuerungsglied 75' mit einem Verstärkungsfaktor -k. Dieser beschreibt den Zusammenhang zwischen einer Änderung des Blindstroms als Folge einer Spannungsänderung. Es sei angemerkt, dass ein solches Proportionalglied 75' nicht zwingend erforderlich ist, sondern dass eine an sich beliebige Struktur genügt, welche ein proportionales Verhalten in stationärer Hinsicht aufweist. Der von dem Proportionalglied 75' ausgegebene Wert Δi_{Q} wird als dynamische Komponente der statischen Komponente hinzuaddiert, wie vorstehend beschrieben.

Eine für die praktische Implementation besonders geeignete Ausführung des Washout-Filters 71 ist in Fig. 3 b dargestellt. Danach ist das Washout-Filter 71 gebildet durch die Parallelschaltung eines Tiefpasses 72 mit einer Direktverbindung 73 und einem Differenzglied 74, wobei der Ausgang des Tiefpasses 72 mit positivem und die Direktverbindung 73 mit negativem Vorzeichen angelegt ist. Der Tiefpass 72 erzeugt aus der von dem Spannungssensor 50 gemessenen Spannung v_{WT} an der Windenergieanlage 4 eine geglättete Spannung v_{filt}. Wird von dieser der aktuelle Messwert v_{WT} abgezogen, so heben sich dabei stationäre Änderungen der Spannung auf. Übrig bleiben nach dem Differenzglied 74 dann nur schnelle dynamische Spannungsänderungen Δv_{VS}. Damit kann auf einfache und effiziente Weise die gewünschte Fokussierung auf die Spannungsänderungen erreicht werden.

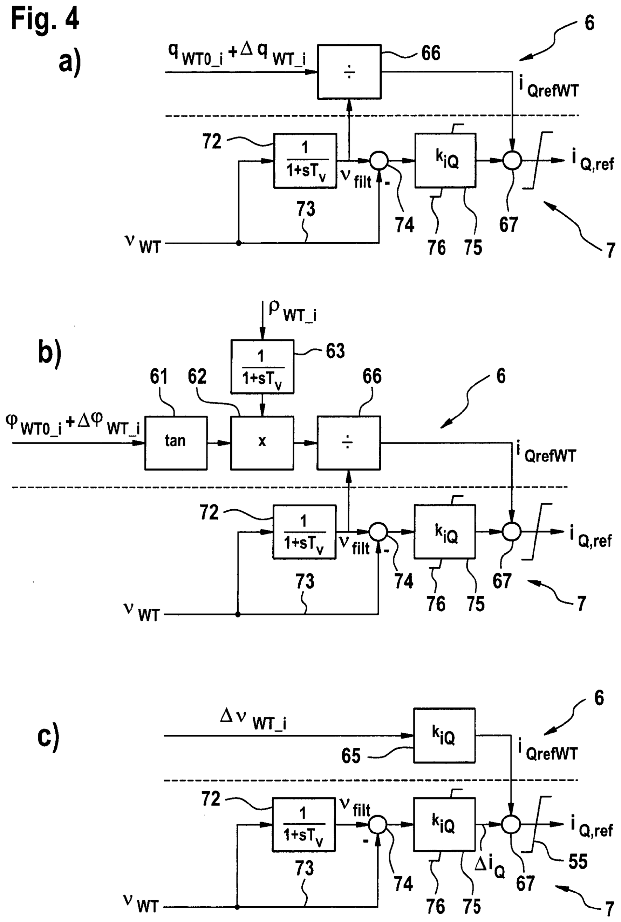

Drei Beispiele für praktisch ausgeführte lokale Regler 5 für die Windenergieanlagen 4 sind in Fig. 4 dargestellt. In Fig. 4 a ist ein Regler 5 dargestellt, bei dem die Blindleistung q als Bezugsgröße fungiert. Er umfasst einen Sollwertkanal 6 für die stationäre Komponente und einen Responsivkanal 7, der auf dem in Fig. 3 b dargestellten Rumpfkonzept basiert, für die dynamische Komponente. Für die stationäre Komponente dient als Grundsignal das vom Parkmaster 1 ausgegebene Signal für die Blindleistung Δq_{WT_i} (der Index i beschreibt hier die i-te Windenergieanlage des Windparks) ; zu diesem Wert wird hinzugefügt ein Wert q_{WT0_}i, der ein Signal für den stationären Einstellpunkt der Blindleistung für die jeweilige Windenergieanlage darstellt. Der zur Erreichung dieser Sollwerte einzustellende Blindstrom wird berechnet mittels eines Divisionsglieds 66 aus dem Bezugswert für die Blindleistung geteilt durch einen geglätteten Wert für die Spannung an der Windenergieanlage, wobei der geglättete Wert von dem Tiefpassfilter 72 des Washout-Filters 71 aus der dynamischen Komponente entnommen wird. Die Verwendung des geglätteten Werts aus dem Tiefpassfilter 72 bietet den Vorteil, dass durch diese Filterung verhindert wird, dass die trägere stationäre Regelung durch den Parkmaster 1 der schnellen Spannungsregelung gemäß der dynamischen Komponente entgegenwirkt. Die Ausgangswerte des Sollwertkanals 6 und des Responsivkanals 7 sind an ein Summationsglied 67 angelegt, welches als Aggregator die beiden Werte addiert.

Eine zweite alternative Ausführungsform ist in Fig. 4 b dargestellt. Er umfasst ebenfalls einen Sollwertkanal 6 und einen Responsivkanal 7, deren Werte über ein Summationsglied 67 als Aggregator zusammengefasst werden. Hierbei wird wiederum vom Parkmaster 1 ein Signal als Bezugswert für den Sollwertkanal 6 angelegt, und zwar bei dieser Ausführungsform für jede Windenergieanlage ein Bezugswert für den einzustellenden Phasenwinkel Δφ_{WT_i}. Zu diesem Sollwert wird hinzuaddiert ein Wert φ_{WT0_i}, welcher ein Signal für den stationären Einstellwert des Phasenwinkels der jeweiligen Windenergieanlage 4 darstellt (üblicherweise handelt es sich hierbei um einen Phasenwinkel von Null, d. h. φ_{WT0_}i=0). Aus dem Tangens 61 des Phasenwinkels φ wird durch Multiplizieren 62 mit einem Wert für die Wirkleistung p_{WT_i} der Windenergieanlage schließlich eine Blindleistungsreferenz berechnet. Die von der Windenergieanlage abgegebene Wirkleistung p_{WT_i} wird hierbei nicht direkt verwendet, sondern vorher einem Tiefpass 63 zugeführt, um so einen stabilen Wert zu erhalten und der Gefahr eines Entgegenwirkens zur schnellen Spannungsregelung gemäß dem Responsivkanal 7 entgegenzuwirken. Der so ermittelte Wert für die Blindleistungsreferenz wird dann weiterverarbeitet mittels des Divisionsglieds 66, wie vorstehend in Bezug auf Fig. 4 a erläutert.

Eine weitere alternative Ausführungsform ist in Fig. 4 c dargestellt, wobei als Parameter für den Sollwertkanal 6 eine Referenzspannung verwendet wird. Hierbei wird von dem Parkmaster 1 ein Wert für eine Spannungsänderung Δv_{WT_i} ausgegeben an die jeweilige Windenergieanlage. Es sei angenommen, dass bei einer Einstellung auf Nennspannung kein Blindstrom erforderlich sei. Das Spannungsänderungssignal Δv_{WT_i} ist angelegt an ein Proportionalglied 65, welches einen Verstärkungsfaktor von k_{iQ} aufweist und den Verstärkungsfaktor der lokalen Blindstromreaktion auf eine Änderung der Spannungsänderungsreferenz beschreibt. Ausgangswert des Proportionalglieds 65 ist ein Sollstrom i_{QrefWT} als Ausgangswert des Sollwertkanals 6. Diesem wird an dem Summationsglied 67 wie auch bei den Ausführungsformen gemäß Fig. 4 a und 4 b der Ausgangswert des Responsivkanals 7 hinzugefügt.

Es sei noch angemerkt, dass bei allen Ausführungsformen 4a, 4b und 4c vorzugsweise nach dem Summationsglied 67 eine Begrenzung 55 des von dem lokalen Regler 5 an den Umrichter 45 ausgegebenen Referenzwerts für den Blindstrom erfolgt, und zwar sowohl in Bezug auf ein einzuhaltendes Minimum wie auch ein einzuhaltendes Maximum. Hiermit wird für die lokale Regelung eine schnelle, autarke Regelung geschaffen. Sie ist in dem Sinne autark, dass der Responsivkanal 7 keinen Sollwert vom Parkmaster 1 erhält. Responsivkanal 7 kann damit eigenständig und schnell auf Spannungsänderungen reagieren, ohne dass dazu erst Sollwerte vom Parkmaster 1 ermittelt und über das Kommunikationsnetz 2 verteilt zu werden brauchen. Die Regelung kann damit sehr schnell auf Veränderungen reagieren, und insbesondere im Fall eines Kurzschlusses mit entsprechender Einspeisung von Blindstrom reagieren. Dazu ist die autarke Regelung im Responsivkanal 7 vorzugsweise mit einer kurzen Zeitkonstante parametriert, zweckmäßigerweise im Bereich von 20 bis 30 ms. Damit ist sie befähigt, durch schnelle Spannungsänderungen auf Einbrüche zu reagieren. Die lokale Regelung 5 weist mit ihrem Responsivkanal 7 damit die Fähigkeit auf, schnell reagieren zu können und Blindstrom unmittelbar an der einzelnen Windenergieanlage 4 einspeisen zu können. Um noch stärker reagieren zu können, sind Begrenzer 76 an dem Reglerkern 75 des Responsivkanals 7 vorgesehen, welche erhöhte Grenzwerte aufweisen unter Nutzung von Kurzzeit-Überlastungsreserven des Umrichters 45. Damit ist nicht nur eine schnellere, sondern auch eine harte Reaktion auf Spannungsänderungen, wie sie durch Kurzschlüsse oder durch Lastabwürfe entstehen können, sichergestellt. Durch die erweiterten Grenzwerte wird damit ein Überlastmodul 76 geschaffen.

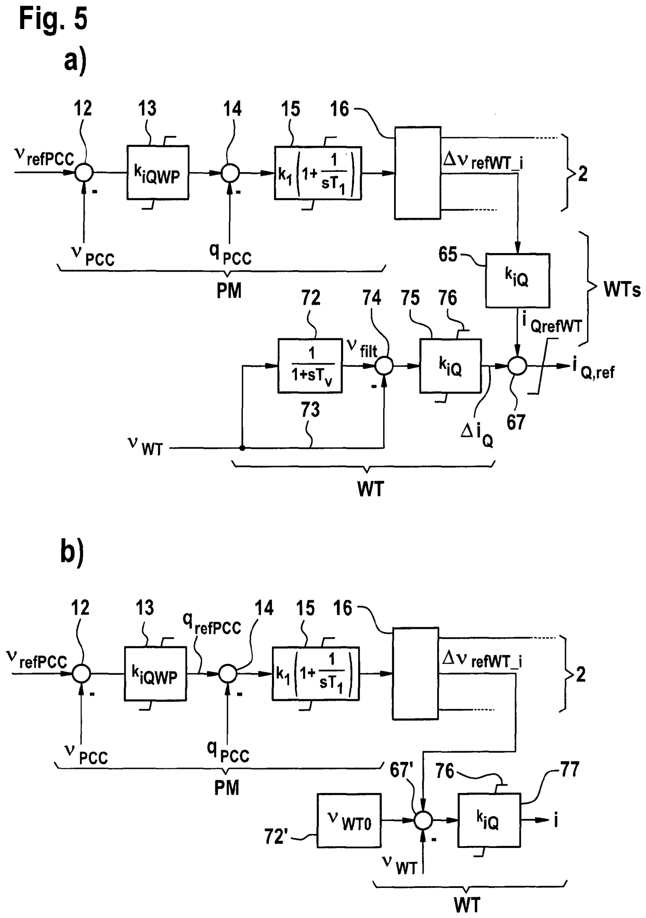

Eine Kombination der lokalen Regelung 5 und des Parkmasters 1 unter Verwendung der Spannungsstatik 13 ist dargestellt in Fig. 5 a. In dem oberen, mit der Bezeichnung "PM" beschrifteten Bereich der Figur ist die Regelung des Parkmasters 1 mit der Spannungsstatik abgebildet. In dem unteren, mit der Bezeichnung "WT" versehenen Bereich ist der lokale Regler 5 mit seinem Responsivkanal 7 und in dem seitlichen, mit der Bezeichnung "WTs" bezeichneten Bereich ist der Sollwertkanal 6 der lokalen Reglers 5 dargestellt. Mittels der Spannungsstatik 13 wird aus der Referenzspannung und der Ist-Spannung am Verknüpfungspunkt 9 ein Referenzwert für die abzugebende Blindleistung gebildet und mit einem Wert für die tatsächlich von dem Windpark abgegebene Blindleistung an der Differenzstelle 14 verglichen. Der Reglerkern 15 des Parkmasters 1 bestimmt daraus Spannungsreferenzsignale für die Windenergieanlagen 4, wobei für jede der Windenergieanlagen 4 ein individuelles Signal Δv_{refWT_i} generiert und über einen Verteiler 16 sowie das parkinterne Kommunikationsnetz 2 verteilt wird.

Gemäß einer besonders vorteilhaften Ausführungsform, die ggf. unabhängigen Schutz verdient, ist in Fig. 5 b eine Verschiebung des Aggregators vorgesehen, und zwar in der Art, dass er nunmehr als an den Eingang des Reglers verschobenes Summationsglied 67' ausgeführt ist, wobei der Regler nunmehr ein kombinierter Regler 77 ist, in dem der autarke Regler 75 und der Regler 65 des Sollwertkanals 6 zusammengefasst sind. Hierbei macht sich die Erfindung zu Nutze, dass es sich bei dem über das Kommunikationsnetz 2 von dem Parkmaster 1 an die einzelne Windenergieanlage 4 gesendeten Signals ebenfalls um ein Spannungssignal handelt, welches auch in dem autarken Regler des Responsivkanals 7 verwendet wird. Damit kann es ohne Weiteres an dem Summationsglied 67' angelegt werden. Weiter ist anstelle des Washout-Filters 71 ein "virtueller Hochpass" gebildet. Er umfasst einen Speicher 72' und das verschobene Summationsglied 67'. Der Speicher 72' speichert den stationären Einstellwert der Spannung v_{WT0} an der Windenergieanlage 4 und legt ihn an einen Eingang des verschobenen Summationsglieds 67', wobei an dessen anderen Eingang die von dem Spannungssensor 50gemessene Spannung v_{WT} angelegt ist. Die Erfindung hat erkannt, dass für praktische Anwendungen die Verwendung dieses Einstellwerts und dessen Einspeicherung als Ersatzgröße dienen kann für den gefilterten Spannungswert v_{filt}, wie er durch den Tiefpassfilter 72 erzeugt wurde. Damit kann der Tiefpassfilter 72 entfallen. Diese vereinfachte Struktur ist in Fig. 5 b dargestellt. Man erkennt durch einen Vergleich mit der funktional gleichwertigen Struktur in Fig. 5 a deutlich die Vereinfachung. Es sei noch angemerkt, dass der Wert von v_{WT0} entweder als ein Festwert für sämtliche Windenergieanlagen 4 des Windparks gewählt werden kann oder als ein individuell für jede Windenergieanlage optimierter Wert.

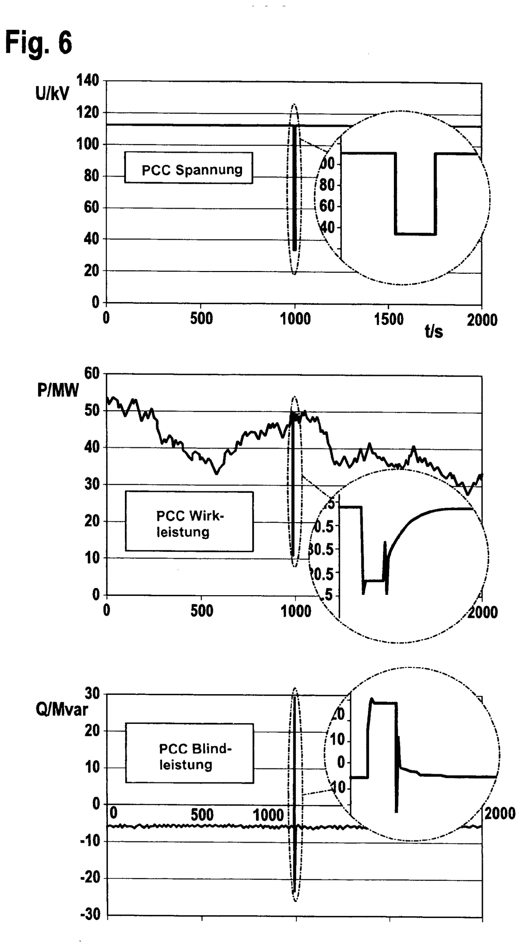

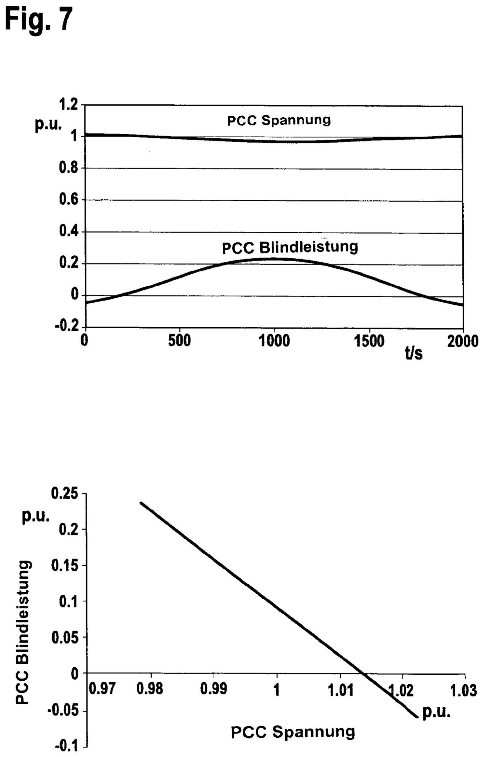

Die Anwendung der Erfindung auf einen Windpark an einem 110 kV Übertragungsnetz 9 ist in Fig. 6 und 7 dargestellt. Zum Zeitpunkt t = 1000 s tritt eine Netzstörung auf in Gestalt eines kurzschlussartigen Spannungseinbruchs. Diese dauert an über einen Zeitraum von 300 ms. Dies ist in dem obersten Diagramm in Fig. 6 dargestellt. Aufgrund des Spannungseinbruchs verringert sich wegen der Beziehung P = U x I die eingespeiste Wirkleistung entsprechend, wie aus dem mittleren Diagramm in Fig. 6 zu ersehen ist. Auf diese Änderung reagiert der lokale Regler 5 der Windenergieanlage 4 damit, indem der Responsivkanal 7 auf die Spannungsänderung anspricht und entsprechend die Abgabe von Blindleistung sehr schnell erhöht (s. unteres Diagramm in Fig. 6). Nach Fehlerklärung gehen sowohl die Spannung wieder auf ihren ursprünglichen Wert zurück wie auch die kurzfristig stark erhöhte Blindleistungseinspeisung.

Eine zweite Simulation des Verhaltens des erfindungsgemäßen Windparks bei einer langsamen Spannungsänderung ist in Fig. 7 dargestellt. Wie vorgesehen stellt die statische Spannungskontrolle auf Parkebene sicher, dass eine lineare Beziehung zwischen Spannung und Blindleistung am Verknüpfungspunkt 9 besteht.

## Patentansprüche

1. Windpark umfassend einen Parkmaster (1), ein Parknetz (3) und mehrere Windenergieanlagen (4) zur Einspeisung von Leistung in ein Netz (99) gemäß einem Leitparameter, wobei der Parkmaster (1) einen Regler (15) aufweist mit einem Eingang für den Leitparameter und einen Eingang für Ist-Wert der eingespeisten Leistung und eine Ausgabeeinheit (16), welche Sollwertvorgaben an die Windenergieanlagen (4) ausgibt, wobei die Windenergieanlage (4) einen von einem Windrotor (40) angetriebenen Generator mit Umrichter (45) zur Erzeugung elektrischer Energie und Abgabe an das Parknetz (3) und einen Lokalregler (5) für die vom Parkmaster (1) angelegte Sollwertvorgabe aufweist,
**dadurch gekennzeichnet, dass**
der Lokalregler (5) eine Doppelstruktur aufweist und umfasst einen Sollwertkanal (6), an dem die Sollwertvorgabe vom Parkmaster (1) angelegt ist und der ausgebildet ist zur Ausgabe eines stationären Blindleistungssollwerts, und einen Responsivkanal (7), der einen autarken Regler (75) umfasst, der keinen Eingang für eine externe Sollwertvorgabe aufweist und an den eine Istspannung der jeweiligen Windenergieanlage (4) über einen Washout-Filter (71) angelegt ist, sowie einen Aggregator (67) für den Sollwertkanal und den Responsivkanal zur Ausgabe an den Umrichter (45),
wobei der Responsivkanal (7) ein Überlastmodul (76) aufweist, das erhöhte Grenzwerte für eine Ausgangsgröße des autarken Reglers (75) zumindest für eine beschränkte Zeit vorsieht.

2. Windpark nach Anspruch 1, **dadurch gekennzeichnet, dass** ein Untermodul (72) für das Washout-Filter (71) zur Bestimmung eines geglätteten Spannungsverlaufs vorgesehen ist.

3. Windpark nach einem der vorangehenden Ansprüche, **dadurch gekennzeichnet, dass** der Washout-Filter (71) gebildet ist aus einem Untermodul (72) zur Bestimmung eines geglätteten Spannungsverlaufs und einem Differenzglied (74), an dessen einem Eingang ein Ausgang des Untermoduls (72) und an dessen anderem Eingang ein Ist-Wert für die Spannung angeschlossen ist.

4. Windpark nach Anspruch 3, **dadurch gekennzeichnet, dass** das Untermodul (72) einen Tiefpass umfasst.

5. Windpark nach einem der vorangehenden Ansprüche, **dadurch gekennzeichnet, dass** der Sollwertkanal (6) einen eigenen Regler (65) aufweist, der vorzugsweise entsprechend dem autarken Regler (75) parametrisiert ist.

6. Windpark nach Anspruch 5, **dadurch gekennzeichnet, dass** der eigene Regler (65) und der autarke Regler (75) als ein kombinierter Regler (77) ausgeführt sind.

7. Windpark nach einem der vorangehenden Ansprüche, **dadurch gekennzeichnet, dass** das Washout-Filter (71) einen Speicher (72') umfasst, wobei der Speicher (72') einen stationären für die Spannung der Windenergieanlage (1) geglätteten Spannungswert ausgibt, zur Umrechnung von Blindleistungssollwerten in Ströme und/oder zur Differenzbildung mit einem Ist-Wert für die Spannung.

8. Windpark nach einem der vorangehenden Ansprüche, **dadurch gekennzeichnet, dass** der autarke Regler (75) der Windenergieanlage so auf den Regler (15) am Parkmaster (1) abgestimmt, dass der autarke Regler (75) schneller als der Regler (15) am Parkmaster (1) ist.

9. Windenergieanlage mit einem von einem Windrotor (40) angetriebenen Generator (42) mit Umrichter (45) zur Erzeugung elektrischer Leistung und Abgabe an ein Netz (3) und einen Lokalregler (5), der auf den Umrichter (45) wirkt und einen Eingang für eine außen angelegte Sollwertvorgabe aufweist, **dadurch gekennzeichnet, dass**
der Lokalregler eine Doppelstruktur aufweist mit einem Sollwertkanal, an dem der Eingang für die Sollwertvorgabe angelegt ist und der ausgebildet ist zur Ausgabe eines stationären Blindleistungssollwerts,
einem Responsivkanal, der einen autarken Regler (75) umfasst, der keinen Eingang für eine externe Sollwertvorgabe aufweist und an den über ein Washout-Filter (71) eine Istspannung der Windenergieanlage angelegt ist,
und einem Aggregator für den Sollwertkanal und den Responsivkanal zur Ausgabe an den Umrichter (45),
wobei der Responsivkanal (7) ein Überlastmodul (76) aufweist, das erhöhte Grenzwerte für eine Ausgangsgröße des autarken Reglers (75) zumindest für eine beschränkte Zeit vorsieht.

10. Windenergieanlage nach Anspruch 9, **dadurch gekennzeichnet, dass** sie nach einem der Ansprüche 2 bis 7 weitergebildet ist.

11. Verfahren zum Betreiben eines Windparks umfassend einen Parkmaster (1), ein Parknetz (3) und mehrere Windenergieanlagen (4) zur Einspeisung von Leistung in ein Netz (99) gemäß einem Leitparameter, wobei der Parkmaster (1) einen Regler (15) aufweist mit einem Eingang für den Leitparameter und einen Eingang für Ist-Werte der eingespeisten Leistung und eine Ausgabeeinheit (16), und die Windenergieanlage (4) einen von einem Windrotor (40) angetriebenen Generator mit Umrichter (45) und einen Lokalregler (5) aufweist, wobei von dem Regler im Parkmaster Sollwertvorgaben an die Windenergieanlagen (4) ausgegeben werden, welche anhand der angelegten Sollwertvorgaben elektrischer Energie erzeugen und an das Parknetz (3) abgeben,
**gekennzeichnet durch**
Vornehmen einer Doppelverarbeitung im Lokalregler (5), wobei mittels eines Sollwertkanals (6) die Sollwertvorgabe vom Parkmaster (1) verarbeitet und ein stationärer Blindleistungssollwert ausgegeben wird, und wobei
mittels eines Responsivkanals (7) eine autarke Regelung (75) unabhängig von der Sollwertvorgabe vom Parkmaster (1) in der Weise erfolgt, dass als Eingangssignal eine durch ein Washout-Filter (71) gefilterte Istspannung der jeweiligen Windenergieanlage (4) verwendet wird, und
Ausgabesignale von dem Sollwertkanal und dem Responsivkanal aggregiert und an den Umrichter (45) ausgegeben werden, wobei von einem Überlastmodul des Responsivkanals (7) erhöhte Grenzwerte für eine Ausgangsgröße des autarken Reglers (75) zumindest für eine beschränkte Zeit vorgesehen werden.

12. Verfahren nach Anspruch 11, **dadurch gekennzeichnet, dass** die autarke Regelung nach einem der Ansprüche 2 bis 8 weitergebildet ist.

## Claims

1. Wind farm comprising a farm master (1), a farm grid (3) and a plurality of wind turbines (4) for feeding power to a grid (99) in accordance with a control parameter, wherein the farm master (1) has a controller (15) comprising an input for the control parameter and an input for the actual value for the fed power, and an output unit (16), which outputs setpoint value presets to the wind turbines (4), wherein the wind turbine (4) has a generator driven by a wind rotor (40) and comprising a converter (45) for generating electrical energy and outputting said energy to the farm grid (3) and a local controller (5) for the setpoint value preset applied by the farm master (1),
**characterized in that**
the local controller (5) has a double structure and comprises a setpoint value channel (6), at which the setpoint value preset is applied by the farm master (1) and which is designed to output a steady-state setpoint reactive power value, and a responsive channel (7), which comprises an autonomous controller (75), which does not have an input for an external setpoint value preset and to which an actual voltage of the respective wind turbine (4) is applied via a washout filter (71), and
an aggregator (67) for the setpoint value channel and the responsive channel for output to the converter (45),
wherein the responsive channel (7) has an overload module (76), which provides increased limit values for an output variable of the autonomous controller (75) at least for a limited time.

2. Wind farm according to Claim 1, **characterized in that** a submodule (72) for the washout filter (71) for determining a smoothed voltage profile is provided.

3. Wind farm according to one of the preceding claims, **characterized in that** the washout filter (71) is formed from a submodule (72) for determining a smoothed voltage profile and a differential element (74), to the one input of which an output of the submodule (72) is connected and to the other input of which an actual value for the voltage is connected.

4. Wind farm according to Claim 3, **characterized in that** the submodule (72) comprises a low-pass filter.

5. Wind farm according to one of the preceding claims, **characterized in that** the setpoint value channel (6) has a dedicated controller (65), which is preferably parameterized corresponding to the autonomous controller (75).

6. Wind farm according to Claim 5, **characterized in that** the dedicated controller (65) and the autonomous controller (75) are in the form of a combined controller (77).

7. Wind farm according to one of the preceding claims, **characterized in that** the washout filter (71) comprises a memory (72'), wherein the memory (72') outputs a steady-state voltage value which is smooth for the voltage of the wind turbine (1), for converting setpoint reactive power values into currents and/or for difference formation with an actual value for the voltage.

8. Wind farm according to one of the preceding claims, **characterized in that** the autonomous controller (75) of the wind turbine is matched to the controller (15) at the farm master (1) in such a way that the autonomous controller (75) is faster than the controller (15) at the farm master (1).

9. Wind turbine comprising a generator (42) driven by a wind rotor (40) and comprising a converter (45) for generating electric power and outputting said electric power to a grid (3) and a local controller (5), which acts on the converter (45) and has an input for an externally applied setpoint value preset,
**characterized in that**
the local controller has a double structure with a setpoint value channel, at which the input for the setpoint value preset is applied and which is designed to output a steady-state setpoint reactive power value,
a responsive channel, which comprises an autonomous controller (75), which does not have an input for an external setpoint value preset and to which an actual voltage of the wind turbine is applied via a washout filter (71),
and an aggregator for the setpoint value channel and the responsive channel for output to the converter (45),
wherein the responsive channel (7) has an overload module (76), which provides increased limit values for an output variable of the autonomous controller (75) at least for a limited time.

10. Wind turbine according to Claim 9, **characterized in that** it is developed according to one of Claims 2 to 7.

11. Method for operating a wind farm comprising a farm master (1), a farm grid (3) and a plurality of wind turbines (4) for feeding power into a grid (99) in accordance with a control parameter, wherein the farm master (1) has a controller (15) comprising an input for the control parameter and an input for actual values for the fed power and an output unit (16), and the wind turbine (4) has a generator driven by a wind rotor (40) and comprising a converter (45) and a local controller (5), wherein setpoint value presets are output to the wind turbines (4) by the controller in the farm master, which wind turbines generate electrical energy on the basis of the applied setpoint value presets and output this electrical energy to the farm grid (3), **characterized by**
the implementation of double processing in the local controller (5), wherein the setpoint value preset is processed by the farm master (1) by means of a setpoint value channel (6), and a steady-state setpoint reactive power value is output, and wherein autonomous control (75) is performed by means of a responsive channel (7) independently of the setpoint value preset by the farm master (1) in such a way that an actual voltage of the respective wind turbine (4) which is filtered by a washout filter (71) is used as input signal, and
output signals from the setpoint value channel and the responsive channel are aggregated and output to the converter (45),
wherein by an overload module (76) of the responsive channel (7) are provided increased limit values for an output variable of the autonomous controller (75) at least for a limited time.

12. Method according to Claim 11, **characterized in that** the autonomous control is developed according to one of Claims 2 to 8.

## Revendications

1. Parc éolien comprenant un maître de parc (1), un réseau de parc (3) et plusieurs éoliennes (4) destinées à injecter de l'énergie dans un réseau (99) conformément à un paramètre de conduite, dans lequel le maître de parc (1) comporte un régulateur (15) comprenant une entrée destinée au paramètre de conduite et une entrée destinée à la valeur réelle de l'énergie injectée, et une unité de sortie (16) qui délivre des valeurs de consigne aux éoliennes (4), dans lequel l'éolienne (4) comporte un générateur entraîné par un rotor éolien (40) comprenant un convertisseur (45) destiné à générer de l'énergie électrique et à la délivrer au réseau de parc (3) et un régulateur local (5) destiné à la donnée de valeur de consigne appliquée par le maître de parc (1), **caractérisé en ce que**
le régulateur local (5) présente une structure double et comprend un canal de valeur de consigne (6) auquel est appliquée la donnée de valeur de consigne du maître de parc (1) et qui est conçu pour délivrer une valeur de consigne de puissance réactive en régime permanent, et un canal de réponse (7) qui comprend un régulateur autonome (75) ne comportant aucune entrée destinée à une donnée de valeur de consigne externe et auquel une tension réelle de l'éolienne respective (4) est appliquée par l'intermédiaire d'un filtre de purge (71), et un agrégateur (67) destiné au canal de valeur de consigne et au canal de réponse pour la sortie vers le convertisseur (45),
dans lequel le canal de réponse (7) comporte un module de surcharge (76) qui établit des valeurs limites plus élevées pour une grandeur de sortie du régulateur autonome (75) au moins pendant un temps limité.

2. Parc éolien selon la revendication 1, **caractérisé en ce qu'**il est prévu un sous-module (72) destiné au filtre de purge (71) pour déterminer une courbe de tension lissée.

3. Parc éolien selon l'une des revendications précédentes, **caractérisé en ce que** le filtre de purge (71) est formé à partir d'un sous-module (72) destiné à déterminer une courbe de tension lissée et d'un élément différentiel (74) à une entrée duquel est reliée une sortie du sous-module (72) et à l'autre entrée duquel est reliée une valeur réelle de la tension.

4. Parc éolien selon la revendication 3, **caractérisé en ce que** le sous-module (72) comprend un filtre passebas.

5. Parc éolien selon l'une des revendications précédentes, **caractérisé en ce que** le canal de valeur de consigne (6) comporte son propre régulateur (65), qui est de préférence paramétré d'une manière qui correspond au régulateur autonome (75).

6. Parc éolien selon la revendication 5, **caractérisé en ce que** le régulateur propre (65) et le régulateur autonome (75) sont réalisés sous la forme d'un régulateur combiné (77).

7. Parc éolien selon l'une des revendications précédentes, **caractérisé en ce que** le filtre de purge (71) comprend une mémoire (72'), dans lequel la mémoire (72') délivre une valeur de tension en régime stationnaire lissée pour la tension de l'éolienne (1), pour convertir des valeurs de consigne de puissance réactive en des courants et/ou pour calculer la différence par rapport à une valeur réelle de la tension.

8. Parc éolien selon l'une des revendications précédentes, **caractérisé en ce que** le régulateur autonome (75) de l'éolienne est adapté au régulateur (15) du maître de parc (1) de telle sorte que le régulateur autonome (75) soit plus rapide que le régulateur (15) du maître de parc (1).

9. Éolienne comprenant un générateur (42) entraîné par un rotor éolien (40) et un convertisseur (45) destiné à générer de l'énergie électrique et à la délivrer à un réseau (3), et un régulateur local (5) qui agit sur le convertisseur (45) et comporte une entrée destinée à recevoir une donnée de valeur de consigne appliquée de l'extérieur,
**caractérisée en ce que**
le régulateur local présente une structure double comprenant un canal de valeur de consigne auquel est appliquée la donnée de valeur de consigne et qui est conçu pour délivrer une valeur de consigne de puissance réactive en régime permanent,
un canal de réponse qui comprend un régulateur autonome (75) ne comportant aucune entrée destinée à une donnée de valeur de consigne externe et auquel une tension réelle de l'éolienne est appliquée par l'intermédiaire d'un filtre de purge (71),
et un agrégateur destiné au canal de valeur de consigne et au canal de réponse pour la sortie vers le convertisseur (45),
dans lequel le canal de réponse (7) comporte un module de surcharge (76) qui établit des valeurs limites plus élevées pour une grandeur de sortie du régulateur autonome (75) au moins pendant un temps limité.

10. Éolienne selon la revendication 9, **caractérisée en ce qu'**elle est en outre réalisée selon l'une des revendications 2 à 7.

11. Procédé d'exploitation d'un parc éolien comprenant un maître de parc (1), un réseau de parc (3) et plusieurs éoliennes (4) destinées à injecter de l'énergie dans un réseau (99) conformément à un paramètre de conduite, dans lequel le maître de parc (1) comporte un régulateur (15) comprenant une entrée destinée au paramètre de conduite et une entrée destinée à des valeurs réelles de l'énergie injectée et une unité de sortie (16), et l'éolienne (4) comporte un générateur entraîné par un rotor éolien (40) comprenant un convertisseur (45) et un régulateur local (5), dans lequel des données de valeurs de consigne sont délivrées par le régulateur dans le maître de parc aux éoliennes (4), qui génèrent de l'énergie électrique sur la base des données de valeurs de consigne appliquées et la transmettent au réseau de parc (3),
**caractérisé par**
l'exécution d'un double traitement dans le régulateur local (5), dans lequel la donnée de valeur de consigne est traitée par le maître de parc (1) au moyen d'un canal de valeur de consigne (6) et une valeur de consigne de puissance réactive en régime permanent est délivrée, et dans lequel
une régulation autonome (75) est effectuée au moyen d'un canal de réponse (7) indépendamment de la donnée de valeur de consigne du maître de parc (1) de telle sorte qu'une tension réelle de l'éolienne (4) respective, filtrée par un filtre de purge (71), soit utilisée comme signal d'entrée, et
des signaux de sortie du canal de valeur de consigne et du canal de réponse sont agrégés et transmis au convertisseur (45),
des valeurs limites plus élevées pour les grandeurs de sortie du régulateur autonome (75) étant établies par un module de surcharge du canal de réponse (7) au moins pend un temps limité.

12. Procédé selon la revendication 11, **caractérisé en ce que** la régulation autonome est en outre réalisée selon l'une des revendications 2 à 8.
